# EUROPÄISCHE PATENTSCHRIFT

(11) **EP 1 225 753 B1**
(45) Veröffentlichungstag und Bekanntmachung des Hinweises auf die Patenterteilung: **19.03.2014**
(21) Anmeldenummer: 02000002.2
(22) Anmeldetag: 03.01.2002
(51) Int. Cl.: H04M 3/523, H04M 3/51

(54) **Verteiltes automatisches Anrufverteilsystem mit Notfall-Betriebsart**
Distributed call distribution system with emergency mode
Système distribué de distribution d'appel automatique avec mode d'urgance

(30) Priorität: 18.01.2001 DE 10102174
(43) Veröffentlichungstag der Anmeldung: 24.07.2002
(73) Patentinhaber: Unify GmbH & Co. KG, 81379 München (DE)
(72) Erfinder: Rist, Claus, 44795, Bochum (DE); Roth, Roland, 45886, Gelsenkirchen (DE)
(74) Vertreter: Fritzsche, Thomas

(56) Entgegenhaltungen:
- EP-A- 0 802 665
- US-A- 5 915 012
- "Standard ECMA-285; 2nd Edition; Protocol for Computer Supported Telecommunications Applications (CSTA) Phase III; pages 1-426" Juni 2000 (2000-06) , ECMA XP002264069 * Absatz [20.2.3] *

## Beschreibung

Die Erfindung betrifft ein Verfahren, bei dem auf einer vermittlungstechnischen Anlage eine Registrierfunktion zum Registrieren von Endgeräten einer Gruppe ausgeführt wird. Zur Gruppe gehören die in eine Rufverteilung einzubeziehenden Endgeräte. Ein an der vermittlungstechnischen Anlage ankommender Ruf wird durch eine Rufverteilungsfunktion automatisch an eines der registrierten Endgeräte der Gruppe weitergeleitet.

Ein solches Verfahren ist beispielsweise aus dem ECMA-Standard (European Computer Manufacturer Association) 269, 3. Ausgabe, Dezember 1998 Volume 1, bzw. 4. Ausgabe, Juni 2000, "Services for Computer Supported Telecommunication Applications (CSTA) Phase III", Abschnitt 6.1.3.4.3 "ACD Device Categories" bekannt - nachfolgend als CSTA-Standard bezeichnet. Dabei steht ACD für automatische Rufverteilung (Automatic Call Distribution). Gemäß CSTA-Standard werden die Teilnehmer, deren Endgeräte einer Gruppe zugeordnet sind, auch als sogenannte Agenten bezeichnet, siehe CSTA-Standard, 3. Ausgabe, Abschnitt 6.1.3.7 "Agent" 4. Ausgabe, Seite 24, Abschnitt 6.1.3.6 "Agent". Der ankommende Ruf wird unabhängig von der Zielrufnummer nach vorgegebenen Kriterien verteilt.

Die Registrierfunktion ist beispielweise ein Programm, dass nach der Eingabe einer Kennzahl mit Hilfe eines Endgerätes gestartet wird. Daraufhin fragt die Registrierfunktion ein Benutzerkennzeichen eines Agenten ab. Zu diesem Kennzeichen wird dann die zuvor festgelegte Gruppe ermittelt.

Die vermittlungstechnische Anlage ist eine Anlage, die ankommende Rufe an Hand bestimmter Kriterien weitervermittelt, beispielsweise eine Telekommunikationsanlage oder eine Vermittlungsstelle. Die Rufverteilung lässt sich in unterschiedlichen Datenübertragungsnetzen durchführen, siehe CSTA-Standard, Abschnitt 6.1.4.6 "Media Call Characteristics", wo unter anderem ISDN-Netze (Integrated Services Digital Network), das RSVP-Protokoll (Resource Reservation Protocol) und das Protokoll ATM (Asynchronous Transfer Mode) genannt sind.

Eine Telekommunikationsanlage dient beispielsweise der gebührenfreien Vermittlung von Gesprächen oder Datenübertragungsverbindungen innerhalb des Privatgeländes des Betreibers der Telekommunikationsanlage. Ein Beispiel für eine Telekommunikationsanlage ist die Telekommunikationsanlage vom Typ HICOM der Firma SIEMENS AG. Die Telekommunikationsanlage wird an eine Vermittlungsstelle des öffentlichen Telefonnetzes angeschlossen. Zwischen Telekommunikationsanlage und Vermittlungsstelle wird zur Signalisierung ein Teilnehmerprotokoll eingesetzt, beispielsweise das Protokoll DSS1 (Digital Signalling System One). Die automatische Verteilung von Rufen wird in der Regel in der Telekommunikationsanlage ausgeführt. Jedoch gibt es auch sogenannte virtuelle private Netze, deren Funktionen von einer Vermittlungsstelle erbracht werden. Im Rahmen eines solchen virtuellen Privatnetzes wird die Rufverteilung von einer Vermittlungsstelle erbracht.

Bisher sind üblicherweise alle Endgeräte einer Gruppe an eine vermittlungstechnische Anlage angeschlossen. Sollen auch andere Endgeräte einbezogen werden, z.B. ein Endgerät, an dem ein sogenannter Heimagent arbeitet, so wird die Registrierfunktion ebenfalls verwendet, wobei jedoch eine Reihe von vermittlungstechnischen Besonderheiten zu berücksichtigen sind.

Es ist Aufgabe der Erfindung, zum automatischen Verteilen von Anrufen ein einfaches Verfahren anzugeben, mit dessen Hilfe insbesondere auch Endgeräte an anderen vermittlungstechnischen Anlagen auf einfache Art in die Rufverteilung einbezogen werden können. Außerdem sollen ein zugehöriger Anlagenverbund und ein zugehöriges Programm angegeben werden. Obwohl solche anlagenübergreifenden Rufverteilungen beispielsweise zur US-A-5915012 bekannt sind, sind diese noch nicht gegen einen Aisfall der zentralen Rufverteilungsfunktion abgesichert.

Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass in einer Rufverteilung grundsätzlich ein beliebiges Endgerät einbezogen werden kann, d.h. ein Endgerät an der gleichen vermittlungstechnischen Einrichtung, an einer anderen vermittlungtechnischen Einrichtung gleicher Bauart oder an einer anderen vermittlungstechnischen Einrichtung einer anderen Bauart. So lassen sich Rufe von einer Telekommunikationsanlage an ein an diese Telekommunikationsanlage angeschlossenes Endgerät weiterleiten oder auch an ein Endgerät, das an einer Vermittlungsstelle ohne Zwischenschaltung einer Telekommunikationsanlage angeschlossen ist. Dies bedeutet, dass es nach einer Registrierung der Endgeräte, die zu einer Gruppe gehören, leicht möglich ist, den ankommenden Ruf zu ihnen umzuleiten.

Beim erfindungsgemäßen Verfahren wird zusätzlich zu den eingangs genannten Verfahrensschritten mindestens eine weitere Registrierfunktion auf mindestens einer weiteren vermittlungstechnischen Anlage zum Registrieren von Endgeräten derselben Gruppe ausgeführt. Die Registrierfunktion wird also auf mehrere vermittlungstechnische Anlagen verteilt. Sind die zu derselben Gruppe gehörenden Endgeräte jedoch erst einmal registriert, so lassen sich bisher eingesetzte Rufverteilungsfunktionen im wesentlichen unverändert beibehalten. Aus Sicht der Rufverteilungsfunktion ist es ohne Bedeutung, an welcher vermittlungstechnischen Einrichtung ein Endgerät betrieben wird. Von Bedeutung ist lediglich, ob das Endgerät zur Rufannahme bereit ist. Wurde ein Endgerät ausgewählt, so wird der Ruf zu diesem Endgerät umgeleitet.

Die Gruppe der Endgeräte wird auch als virtuelle Gruppe bezeichnet, weil die Registrierfunktionen auf mehrere vermittlungstechnische Anlagen verteilt sind und weil die Endgeräte an mehrere vermittlungstechnische Anlagen angeschlossen sind. Aus Sicht der Rufverteilfunktion gibt es nur eine Gruppe und es ist unerheblich, an welcher vermittlungstechnischen Anlage die Endgeräte angeschlossen sind. Die Rufverteilungsfunktion tauscht nur mit einer vermittlungstechnischen Anlage Steuernachrichten aus. Die Funktionen der virtuellen Gruppe werden tatsächlich jedoch unter Einbeziehung mehrerer vermittlungstechnischer Anlagen erbracht, insbesondere die Registrierfunktionen.

Bei einer Weiterbildung des erfindungsgemäßen Verfahrens wird die Gruppe durch ein einziges Gruppenkennzeichen bezeichnet. Beim Registrieren wird von einer Registrierfunktion gemeinsam mit einem eindeutigen Gerätekennzeichen des zu registrierenden Endgerätes das Gruppenkennzeichen an die Verteilfunktion übermittelt. Weil alle Registrierfunktionen das gleiche Gruppenkennzeichen verwenden, ist für die Rufverteilfunktion nicht mehr feststellbar, welche vermittlungstechnische Anlage das Endgerät registriert hat. Andere Gruppen haben Gruppenkennzeichen mit anderen Werten. Für verschiedene Gruppen lassen sich unterschiedliche Rufverteilungsfunktionen gemäß verschiedener Kriterien festlegen.

Bei einer anderen Weiterbildung des erfindungsgemäßen Verfahrens wird die Rufverteilfunktion auf einer Datenverarbeitungsanlage ausgeführt, die Nachrichten von den vermittlungstechnischen Anlagen empfängt und Nachrichten an mindestens eine vermittlungstechnische Anlage sendet. Bei einer Ausgestaltung werden Nachrichten gemäß CSTA-Protokoll verwendet. Das Nutzen einer standardisierten Schnittstelle ermöglicht es einem breiten Kreis von Anwendern das erfindungsgemäße Verfahren zu nutzen. Dies sichert eine einfache Umsetzung.

Bei einer nächsten Weiterbildung ist die Datenverarbeitungsanlage mit den vermittlungstechnischen Anlagen über ein Datenübertragungsnetz verbunden. So wird zur Verbindung beispielsweise ein gemäß Internetprotokoll arbeitendes lokales Datenübertragungsnetz (LAN - Local Area Network) eingesetzt. Jedoch lässt sich auch das Internet selbst verwenden.

Bei einer alternativen Weiterbildung des erfindungsgemäßen Verfahrens enthalten die vermittlungstechnischen Anlagen lokale Rufverteilungsfunktionen. Die Registrierfunktion einer vermittlungstechnischen Anlage benachrichtigt auch die lokale Rufverteilungsfunktion derselben vermittlungstechnischen Anlage von der Registrierung eines Endgerätes. Die Rufverteilfunktion lässt sich mit der Registrierfunktion koppeln. Die lokalen Rufverteilungsfunktionen werden auch als ACD-Funktion (Automatic Call Distribution) bezeichnet. Die Weiterleitung eines ankommenden Rufes wird nach einem vorgegebenen Kriterium von der Rufverteilfunktion einer vermittlungstechnischen Anlage an die Rufverteilfunktion der anderen vermittlungstechnischen Anlage übergeben. Ein solches Kriterium ist beispielsweise ein Überlauf für den Fall, dass alle Endgeräte der Gruppe an der ersten vermittlungstechnischen Anlage belegt sind. Die Rufverteilungsfunktionen in den anderen vermittlungstechnischen Anlagen sind über vorgegebene Rufnummern erreichbar, die sich von der Rufnummer der ersten Rufverteilfunktion unterscheiden. Mit Hilfe dieser Weiterbildung lässt sich auf einfache Art ein Notfallkonzept realisieren für den Fall, dass die zentrale Rufverteilungsfunktion nicht genutzt werden soll oder kann. Es lässt sich wahlweise eine lokale oder die zentrale Rufverteilungsfunktion nutzen. Bei einer anderen Weiterbildung werden in lokalen Datenbasissystemen der vermittlungstechnischen Anlagen oder in einer von den vermittlungstechnischen Anlagen gemeinsam genutzten Datenbasis die Zuordnung von Kennzeichen für die Rufverteilung zu der Gruppe gespeichert. Eine Registrierfunktion greift bei der Registrierung auf die lokale Datenbasis ihrer vermittlungstechnischen Anlage oder auf die gemeinsam benutzte Datenbasis zu, um die Gruppe zu ermitteln.

Bei einer nächsten Weiterbildung sind die Kennzeichen Rufnummern von Endgeräten oder Benutzungskennzeichen von Bedienpersonen der Endgeräte. Durch die Einbeziehung von Benutzungskennzeichen entsteht ein endgeräteunabhängiges Verfahren.

Bei einer Weiterbildung sind die vermittlungstechnischen Anlagen über ein Datenübertragungsnetz miteinander verbunden, vorzugsweise über das gleiche Datenübertragungsnetz, das die Datenverarbeitungsanlage mit den vermittlungstechnischen Anlagen verbindet. Als Datenübertragungsnetz sind insbesondere Datenübertragungsnetze geeignet, auf denen Nachrichten gemäß Internetprotokoll übertragen werden können. Die vermittlungstechnischen Anlagen lassen sich jedoch auch auf andere Art miteinander verbinden. Sind die vermittlungstechnischen Anlagen beispielsweise Telekommunikationsanlagen, so lassen sie sich über Querleitungen verbinden. Auf einer Querleitung werden Daten bei einer Ausgestaltung gemäß einem standardisierten Protokoll zum Verbinden von Telekommunikationsanlagen übertragen, z.B. wird das Protokoll QSIG eingesetzt.

Bei einer nächsten Weiterbildung wird unabhängig davon, welche der vermittlungstechnischen Anlagen den ankommenden Ruf empfängt, der Ruf zu einer ausgewählten vermittlungstechnischen Anlage zur Rufverteilung weitergeleitet. Durch diese Maßnahme braucht die zentrale Rufverteilungsfunktion nur mit einer Telekommunikationsanlage Steuerungsnachrichten auszutauschen. Die Einbeziehung mehrerer Telekommunikationsanlagen würde eigentlich eine Verteilung der von der zentralen Rufverteilungsfunktion kommenden Steuerungsnachricht erfordern. Diese Verteilung kann jedoch bei der Weiterbildung entfallen, weil die Steuernachrichten alle zu einer einzigen Telekommunikationsanlage übertragen werden. Die Verteilung von Steuernachrichten ist nicht erforderlich, weil es ausreicht Rufe durch diese Telekommunikationsanlage weiterzuleiten.

Bei einer anderen Weiterbildung des erfindungsgemäßen Verfahrens wird in der ausgewählten vermittlungstechnischen Anlage vorzugsweise an Hand eines Kennzeichens geprüft, ob eine für die vermittlungstechnischen Anlagen gemeinsame zentrale Rufverteilungsfunktion oder mindestens eine lokale Rufverteilungsfunktionen einer vermittlungstechnischen Anlage eingesetzt werden soll. Der Wert des Kennzeichens wird beispielsweise bei Ausfall der zentralen Rufverteilungsfunktion so geändert, dass bei diesem Notfall die lokalen Rufverteilungsfunktionen aktiviert werden.

Die Erfindung betrifft außerdem einen Anlagenverbund aus vermittlungstechnischen Anlagen, auf denen jeweils eine Registrierfunktion zum Registrieren von Endgeräten derselben Gruppe ausgeführt wird. Bei Weiterbildungen des Anlagenverbundes sind die vermittlungstechnischen Anlagen des Anlagenverbundes so aufgebaut, dass mit ihrer Hilfe das erfindungsgemäße Verfahren oder eine seiner Weiterbildungen durchgeführt werden kann. Weiterhin betrifft die Erfindung ein Programm mit einer Befehlsfolge, bei deren Ausführung durch einen Prozessor das erfindungsgemäße Verfahren oder eine seiner Weiterbildungen ausgeführt wird. Die oben genannten technischen Wirkungen gelten auch für den Anlagenverbund und für das Programm.

Im Folgenden werden Ausführungsbeispiele der Erfindung an Hand der beiliegenden Zeichnungen erläutert. Darin zeigen:
- Figur 1: einen Verbund aus Telekommunikationsanlagen,
- Figur 2: Registrierfunktionen des Verbundes,
- Figuren 3A und 3B: beim automatischen Verteilen eines Anrufs mit Hilfe einer virtuellen ACD-Gruppe erzeugte Nachrichten,
- Figur 4: ein Rufmodell eines Anwendungsprogramms in einer ersten Phase einer Rufverteilung, und
- Figur 5: ein Rufmodell des Anwendungsprogramms nach dem Verteilen eines Rufes.

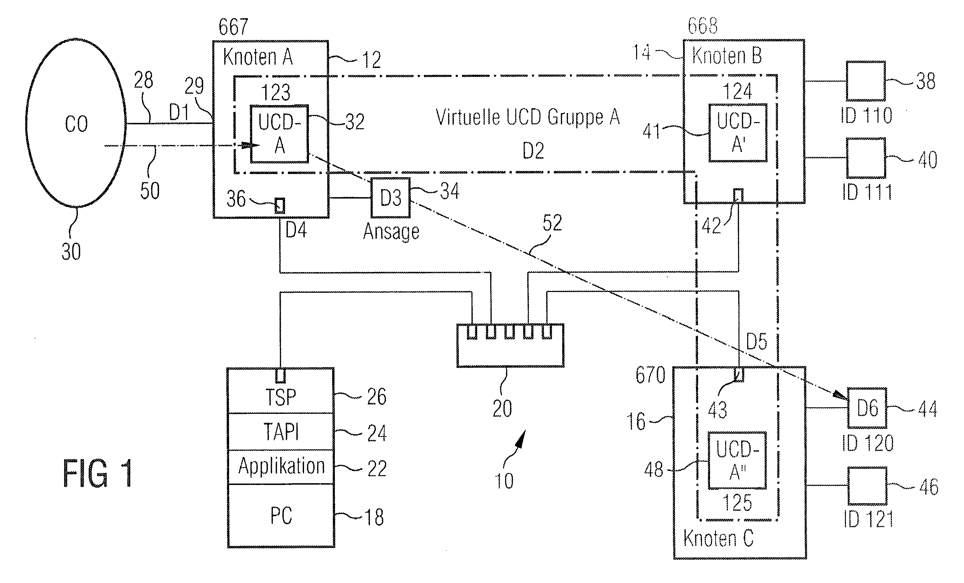

Figur 1 zeigt einen Telekommunikationsanlagenverbund 10, der drei Telekommunikationsanlagen 12 bis 16, einen Rechner 18 und ein lokales Datenübertragungsnetzes 20 enthält, beispielsweise ein Ethernet, das die Telekommunikationsanlagen 12 bis 16 untereinander und jeweils mit dem Rechner 18 verbindet. Die Telekommunikationsanlagen 12 bis 16 sind beispielsweise Telekommunikationsanlagen des Typs HICOM der Firma SIEMENS AG. Die Telekommunikationsanlagen 12 bis 16 wurden um Funktionen zum Nutzen einer virtuellen ACD-Gruppe erweitert. Diese Funktionen werden weiter unten näher erläutert.

Der Rechner 18 ist beispielsweise ein Personalcomputer PC, der eine Speichereinheit und einen Prozessor enthält. In der Speichereinheit ist ein mit Applikation bezeichnetes Anwendungsprogramm 22 gespeichert, das die Rufverteilungsfunktion erbringt, z.B. das Programm Pro Center Office der Firma Cycos AG. Die Funktion des Anwendungsprogramms 22 wird ebenfalls weiter unten erläutert. Außerdem enthält die Speichereinheit des Rechners 18 eine TAPI-Schnittstelle 24 (Telecommunication Application Programming Interface), die von der Firma MICROSOFT GmbH programmiert wurde. Weiterhin ist in der Speichereinheit des Rechners 18 ein TSP-Programm 26 (TAPI Service Provider) enthalten. Das TSP-Programm 26 wird beispielsweise mit den Telekommunikationsanlagen angeboten, z.B. bei Hicom-Anlagen unter der Produktbezeichnung 3-rd Party TSP. Das TSP-Programm 26 schafft eine CSTA-Verbindung zwischen der Telekommunikationsanlage 12 und dem Rechner 18. Außerdem setzt das TSP-Programm CSTA-Befehle in TAPI-Befehle und TAPI-Befehle in CSTA-Befehle um.

Die Telekommunikationsanlage 12 ist über eine Amtsleitung 28 und eine Anschlusseinheit 29 mit einer Vermittlungsstelle 30 eines öffentlichen Telefonnetzes verbunden, z.B. mit dem durchschaltevermittelten Telefonnetz der Deutschen Telekom AG. Die Vermittlungsstelle 30 ist beispielsweise eine Vermittlungsstelle vom Typ EWSD (elektronisch gesteuertes digitales Wählsystem) der Firma Siemens AG.

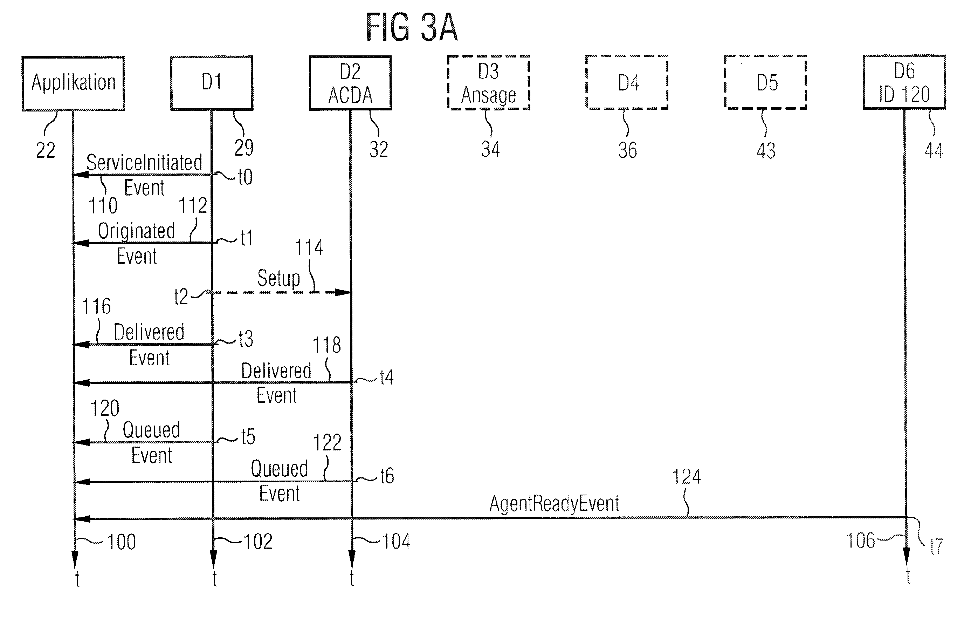

Zum Betreiben des Anlagenverbundes 10 werden Kennzeichen D1 bis D6 verwendet, die Schnittstellen oder Endgeräten der Telekommunikationsanlage 16 zugeordnet sind. Einer Anschlusseinheit zum Anschluss der Amtsleitung 28 an die Telekommunikationsanlage 12 ist ein Kennzeichen D1 zugeordnet, z.B. eine Leitungsnummer. Ein mit UCD-A in Figur 1 bezeichnetes ACD-Gruppenprogramm 32 der Telekommunikationsanlage 12 hat das Kennzeichen D2. Einzelheiten der Funktionen des ACD-Gruppenprogramms 32 werden unten an Hand der Figuren 3A, 3B, 4 und 5 näher erläutert. Einer an die Telekommunikationsanlage 12 angeschlossenen Ansageeinheit 34 wurde das Kennzeichen D3 zugeordnet, das der Rufnummer der Ansageeinheit 34 entspricht. Eine Schnittstelle 36 zum Anschluss der Telekommunikationsanlage 12 an das Datenübertragungsnetz 20 hat das Kennzeichen D4, z.B. eine Leitungsnummer.

An der Telekommunikationsanlage 14 sind eine Vielzahl von Endgeräten angeschlossen, von denen in Figur 1 zwei Endgeräte 38 und 40 dargestellt sind. Den Endgeräten 38 und 40 wurden ebenfalls Kennzeichen zugeordnet, die jedoch aus Gründen der Übersichtlichkeit im Folgenden nicht weiter berücksichtigt werden. Die Endgeräte 38 und 40 sind Endgeräte, die im Rahmen der Rufverteilung genutzt werden, d.h. sogenannte Agentenarbeitsplätze. Die das Endgerät 38 im Rahmen der Rufverteilung bedienende Bedienperson benutzt ein Kennzeichen ID mit dem Wert "110". Die am Endgerät 40 arbeitende Bedienperson benutzt ein Kennzeichen ID mit dem Wert "111". Einer Schnittstelle 42 zum Anschluss der Telekommunikationsanlage 14 an das Datenübertragungsnetz 20 hat ebenfalls ein Kennzeichen, das jedoch aus Gründen der Übersichtlichkeit im Folgenden nicht berücksichtigt wird.

Die Telekommunikationsanlage 14 enthält auch ein mit UCD-A' in Figur 1 bezeichnetes ACD-Gruppenprogramm 41. Das ACD-Gruppenprogramm 41 enthält eine Registrierfunktion für die Registrierung der Endgeräte 38 und 40 im Rahmen der Rufverteilung sowie eine Rufverteilungsfunktion für den Fall, dass das Anwendungsprogramm 22 die Rufverteilung nicht übernehmen kann.

Die Telekommmunkationsanlage 16 ist mit dem Datenübertragungsnetz 20 über eine Schnittstelle 43 verbunden, der das Kennzeichen D5 zugeordnet ist. An die Telekommunikationsanlage 16 sind ebenfalls eine Vielzahl von Endgeräten angeschlossen, von denen in Fig. 1 zwei Endgeräte 44 und 46 dargestellt sind. Beide Endgeräte 44 und 46 werden im Rahmen der Rufverteilung genutzt, d.h. es handelt sich um sogenannte Agentenarbeitsplätze. Die das Endgerät 44 benutzende Bedienperson verwendet ein Kennzeichen ID "120". Die das Endgerät 46 im Rahmen der Rufverteilung nutzende Bedienperson verwendet ein eindeutiges Kennzeichen ID "121". Dem Endgerät 44 wurde ein Kennzeichen D6 zugeordnet, z.B. eine bestimmte Rufnummer. Das dem anderen Endgerät 46 zugeordnete Kennzeichen bzw. dessen Rufnummer wird im Folgenden nicht weiter betrachtet.

Außerdem enthält die Telekommunikationsanlage 16 ein mit UCD-A" in Figur 1 bezeichnetes ACD-Gruppenprogramm 48. Das ACD-Gruppenprogramm 48 enthält eine Registrierfunktion für die Registrierung der Endgeräte 44 und 46 im Rahmen der Rufverteilung sowie eine Rufverteilungsfunktion für den Fall, dass das Anwendungsprogramm 22 die Rufverteilung nicht übernehmen kann.

Zur Steuerung des Anlagenverbundes 10 und zur Steuerung der Rufverteilung werden Nachrichten gemäß CSTA-Standard eingesetzt. Insbesondere werden zur Steuerung der Vermittlungstechnik die CallControlEvent-Nachrichten und die CallControl-Dienste eingesetzt, siehe CSTA-Standard, 3. Ausgabe, Abschnitt 17. Zur Steuerung der Agentenzustände werden die LogicalDevicedFeatureEvent-Nachrichten und die LogicalDevicedFeature-Dienste eingesetzt, siehe CSTA-Standard, Abschnitt 22. Die Steuerung von Ansagen erfolgt mit Hilfe von VoiceUnit-Ereignissen und VoiceUnit-Diensten, siehe CSTA-Standard, Abschnitt 26.

Die Telekommunikationsanlagen 12, 14 und 16 befinden sich beispielsweise in Witten, Deutschland, so dass sie mit der Vorwahl 02302 erreichbar sind. Die Telekommunikationsanlagen 12, 14 und 16 haben in dieser Reihenfolge beispielsweise Anlagenrufnummern 667, 668 und 670. Das ACD-Gruppenprogramm 32 ist unter der Durchwahl 123 erreichbar. Den ACD-Gruppenprogrammen 41 und 48 sind die Rufnummern 124 bzw. 125 zugeordnet. Im Rahmen der Rufverteilung wird nach außen hin nur die Rufnummer 02302667123 bekanntgemacht. Ist die Telekommunikationsanlage 14 ebenfalls an einer Vermittlungsstelle angeschlossen, so lässt sich der Rufverteilungsdienst über die Rufnummer 02302668123 erreichen. In diesem Fall vermittelt die Telekommunikationsanlage 14 bei einem unter dieser Rufnummer ankommenden Ruf zunächst zum ACD-Gruppenprogramm 32 der Telekommunikationsanlage 12.

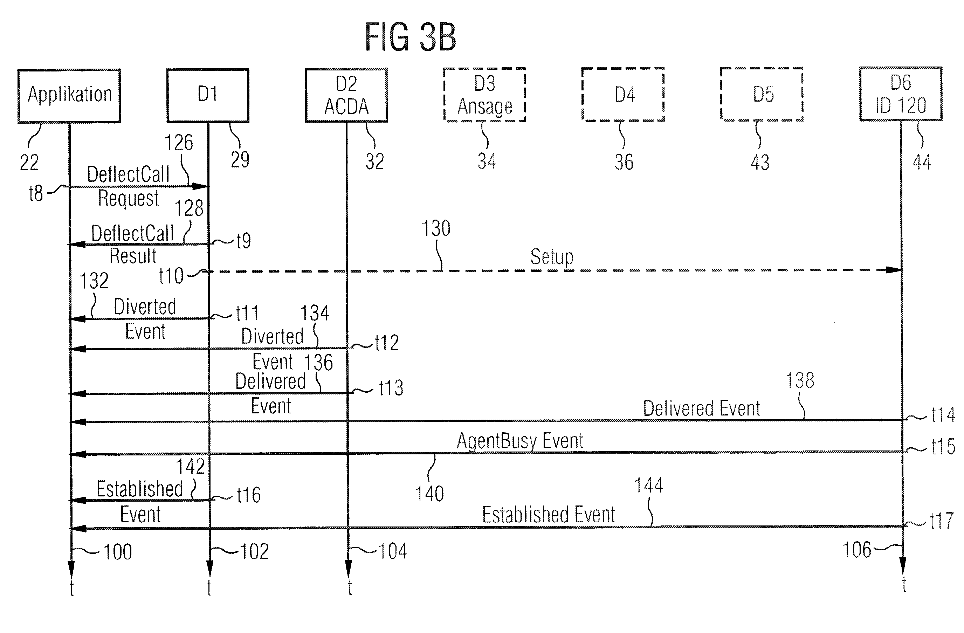

Im Folgenden wird zunächst eine Betriebsart der Rufverteilung erläutert, bei der die Rufverteilung durch das Anwendungsprogramm 22 ausgeführt wird. Diese Betriebsart wird durch das Setzen eines sogenannten Host-Control-Flags in der Telekommunikationsanlage 12 auf den Wert EINS eingestellt. Das Host-Control-Flag wird durch das ACD-Gruppenprogramm 32 ausgewertet. An Hand der Figuren 3A und 3B wird unten erläutert, wie ein ankommender Ruf, siehe Pfeil 50, im Rahmen der Rufverteilung an das Endgerät 44 weitergeleitet wird, siehe Pfeil 52.

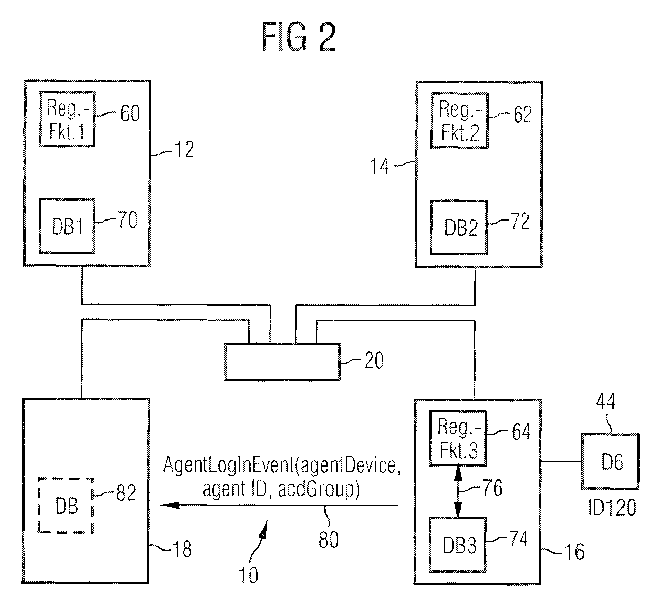

Figur 2 zeigt den Telekommunikationsanlagenverbund 10 und jeweils in den Telekommunikationsanlagen 12, 14 und 16 enthaltene Registrierfunktionen 60, 62 und 64, die zum Registrieren von in die Rufverteilung einzubeziehenden Endgeräten an der jeweiligen Telekommunikationsanlage 12, 14 bzw. 16 dienen. Die Telekommunikationsanlagen 12, 14 und 16 enthalten außerdem jeweils eine lokale Datenbank 70, 72 bzw. 74, in denen Zuordnungen von Kennzeichen ID für Agenten zu Rufverteilungsgruppen gespeichert sind.

Die Registrierfunktionen 60, 62 und 64 arbeiten grundsätzlich gleich, so dass stellvertretend die Registrierfunktion 64 bei der Registrierung des Endgerätes 44 erläutert wird. Es sei angenommen, dass ein Agent mit dem Kennzeichen ID=120 die Registrierfunktion 64 durch Eingabe einer Steuerzeichenfolge mit Hilfe des Endgerätes 44 aktiviert. Die Registrierfunktion 64 fragt zunächst das Kennzeichen ID des Agenten ab. Der Agent gibt sein Kennzeichen ID=120 ein. Das Kennzeichen wird zur Registrierfunktion 64 übermittelt. Die Registrierfunktion 64 führt einen Datenbankzugriff 76 auf die lokale Datenbankbank 74 durch und ermittelt das zum Kennzeichen ID=120 gehörende Gruppenkennzeichen A.

Anschließend erzeugt die Registrierfunktion 64 für das auf dem Rechner 18 ausgeführte Anwendungsprogramm 22 eine CSTA-Nachricht 80, die gemäß CSTA-Standard auch als Agent-LogInEvent-Nachricht bezeichnet wird und die folgenden Parameter enthält:
- agentDevice D6,
- agentID 120,
- acdGroup A.
Aufgrund der Nachricht 80 wird das Endgerät 44 nun in die Rufverteilung einbezogen.

Bei einem anderen Ausführungsbeispiel wird an Stelle oder bei einem automatischen Abgleich zusätzlich zu den lokalen Datenbanken 70 bis 74 eine zentrale Datenbank 82 eingesetzt, die sich beispielsweise ebenfalls im Rechner 18 befindet. Aufgrund der zentralen Datenbank 82 ist es möglich, dass sich ein Agent mit einer bestimmten ID an einer beliebigen Telekommunikationsanlage 12 bis 16 registrieren lässt.

Die Figuren 3A und 3B zeigen Nachrichten, die beim automatischen Vermitteln des ankommenden Rufs zwischen dem Anwendungsprogramm 22 und den Einheiten mit den Kennzeichen D1, D2 und D6 ausgetauscht werden. Zeitstrahlen 100, 102, 104 und 106 sind in dieser Reihenfolge dem Anwendungsprogramm 22 und den Einheiten mit den Kennzeichen D1, D2 und D6 zugeordnet. Die Zeitstrahlen 100 bis 106 verlaufen von oben nach unten, so dass spätere Zeitpunkte weiter unten liegen als frühere Zeitpunkte.

Vor dem Eintreffen des Rufes wurden die Anschlusseinheit 29, das Gruppenprogramm 32 und das Endgerät 44 in die Überwachung durch das Anwendungsprogramm 22 einbezogen. Dazu wurden die CSTA-Nachrichten MonitorStart eingesetzt.

Es sei angenommen, dass der ankommende Ruf 50 zu einem Zeitpunkt an der Anschlusseinheit 29 eintrifft, der vor einem Zeitpunkt t0 liegt. Die Anschlusseinheit 29 erzeugt zum Zeitpunkt t0 aufgrund des ankommenden Rufes eine CSTA-Nachricht 110, die standardgemäß als ServiceInitiatedEvent-Nachricht bezeichnet wird und die folgenden Parameter enthält:
- initiatedConnection D1C1,
- intiatingDevice D1,
- localConnectionInfo Initiated,
- cause new Call,
- callLinkageData G1, T1,
wobei die Kennzeichen mit den oben an Hand der Figur 1 erläuterten Kennzeichen übereinstimmen und G1 ein globales Kennzeichen sowie T1 ein Thread-Kennzeichen bezeichnen. Globale Kennzeichen und Thread-Kennzeichen sind in einem anderen Zusammenhang im CSTA-Standard, Ausgabe 2000, näher erläutert.

Zu einem folgenden Zeitpunkt t1 erzeugt die Anschlusseinheit 29 eine CSTA-Nachricht 112, die gemäß CSTA-Standard als OriginatedEvent-Nachricht bezeichnet wird und die folgenden Parameter enthält:
- originatedConnection D1C1,
- callingDevice D1,
- calledDevice D2,
- localConnectionInfo Connected,
- cause new Call,
- associatedCallingDevice D2,
- callLinkageData G1, T1.

Aufgrund der Nachrichten 110 und 112 kann das Anwendungsprogramm 22 die Vorgänge in der Anschlusseinheit 29 verfolgen. Zu einem Zeitpunkt t2 sendet die Anschlusseinheit 29 eine telekommunikationsanlageninterne Setup-Nachricht 114 an das Gruppenprogramm 32, um eine Verbindung zwischen der Anschlusseinheit 29 und dem zur Zielrufnummer mit den Endziffern "...123" gehörenden Gruppenprogramm 32 herzustellen.

Zu einem Zeitpunkt t3 sendet die Anschlusseinheit 29 aufgrund der zuvor abgesetzten Setup-Nachricht eine CSTA-Nachricht 116, die gemäß CSTA-Standard als DeliveredEvent-Nachricht bezeichnet wird und die folgenden Parameter enthält:
- connection D2C1,
- alertingDevice D2,
- callingDevice D1,
- calledDevice D2,
- originatingNIDConnection D1C1,
- localConnectionInfo Alerting,
- cause entering Distribution,
- associatedCallingDevice D1,
- callLinkageData G1, T1.

Auch das Gruppenprogramm 32 sendet aufgrund der empfangenen Setup-Nachricht 114 zu einem Zeitpunkt t4 an das Anwendungsprogramm 22 eine CSTA-Nachricht 118, die als DeliveredEvent-Nachricht bezeichnet wird und die gleichen Parameter wie die Nachricht 116 enthält.

Die Anschlusseinheit 29 reiht den ankommenden Ruf 50 zunächst in eine Bearbeitungsschlange ein. Nach dem Einreihen der Rufanforderung in die Bearbeitungsschlange wird zu einem Zeitpunkt t5 eine CSTA-Nachricht 120 an das Anwendungsprogramm 22 gesendet, die gemäß CSTA-Standard auch als QueuedEvent-Nachricht bezeichnet wird und die folgenden Parameter enthält:
- queuedConnection D2C1
- callingDevice D1,
- calledDevice D2,
- localConnectionInfo Queued,
- cause no availaible Agents,
- associatedCallingDevice D1,
- callLinkageData G1, T1.

Das Gruppenprogramm 32 reiht die ankommende Rufanforderung ebenfalls in seine Bearbeitungsschlange ein. Zu einem Zeitpunkt t6 sendet das Gruppenprogramm 32 eine CSTA-Nachricht 122 an das Anwendungsprogramm 22. Die CSTA-Nachricht 122 wird gemäß Standard als QueuedEvent-Nachricht bezeichnet und enthält die gleichen Parameter wie die Nachricht 120.

Zu einem Zeitpunkt t7 signalisiert das Endgerät 44 unter Einbeziehung des Gruppenprogramms 48 mit Hilfe einer CSTA-Nachricht 124 dem Anwendungsprogramm 22, dass es zur Annahme weiterer Rufe im Rahmen der Rufverteilung bereit ist. Die CSTA-Nachricht 124 wird gemäß CSTA-Standard als AgentReadyEvent-Nachricht bezeichnet und enthält die folgenden Parameter:
- agentDevice D6,
- agentGroup A,
- AgentID 120.

Das Anwendungsprogramm 22 bezieht aufgrund der CSTA-Nachricht 124 das Endgerät 44 in die Rufverteilung ein. Aufgrund der zu den Zeitpunkten t0 bis t7 übermittelten CSTA-Nachrichten ist das Anwendungsprogramm 22 über den Verbindungszustand des ankommenden Rufes informiert und veranlasst zu einem Zeitpunkt t8 die weitere Verarbeitung des ankommenden Rufes mit Hilfe einer an die Anschlusseinheit 29 gesendeten CSTA-Nachricht 126. Mit Hilfe der CSTA-Nachricht 126 soll der ankommende Ruf an das Endgerät 44 weitergeleitet werden. Die CSTA-Nachricht 126 wird gemäß CSTA-Standard auch als DeflectCallRequest bezeichnet und enthält die folgenden Parameter:
- callToBeDiverted D4C1,
- newDestination D6.
Zu einem Zeitpunkt t9 bestätigt die Anschlusseinheit 29 den Empfang der CSTA-Nachricht 126 mit einer CSTA-Nachricht 128, die an das Anwendungsprogramm 22 gesendet wird. Die CSTA-Nachricht 128 wird gemäß CSTA-Standard auch als DeflectCallResult-Nachricht bezeichnet und enthält keine Parameter.

Zu einem Zeitpunkt t10 veranlasst die Anschlusseinheit 29 aufgrund der Rufweiterleitungsanforderung in der Nachricht 126 den Aufbau einer Verbindung zum Endgerät 44, siehe Setup-Nachricht 130. Für den Verbindungsaufbau wird das in der Nachricht 126 angegebene Kennzeichen D6 genutzt, das mit der Rufnummer des Endgerätes 44 übereinstimmt. Die Setup Nachricht 130 ist an die gleichnamige ISDN-Nachricht angelehnt. Aufgrund der Setup-Nachricht 130 wird der ankommende Ruf 50 zum Endgerät 44 weitervermittelt (siehe Figur1, Pfeil 52). Dabei werden die vermittlungstechnischen Funktionen der Telekommunikationsanlagen 12 und 16 genutzt.

Zu einem Zeitpunkt t11 sendet die Anschlusseinheit 29 eine CSTA-Nachricht 132 an das Anwendungsprogramm 22, die gemäß CSTA-Standard auch als DivertedEvent-Nachricht bezeichnet wird und die folgenden Parameter enthält:
- connection D2C1,
- divertingDevice D2,
- newDestination D6,
- localConnectionInfo Null,
- cause distributed,
- associatedCallingDevice D1,
- callLinkageData G1,T1..

Die Programmgruppe 32 sendet zu einem Zeitpunkt t12 ebenfalls eine CSTA-Nachricht 134 an das Anwendungsprogramm 22. Die CSTA-Nachricht 134 wird gemäß CSTA-Standard auch als DivertedEvent-Nachricht bezeichnet und enthält dieselben Parameter wie die Nachricht 132 hat.

Zu einem Zeitpunkt t13 sendet das Gruppenprogramm 32 an das Anwendungsprogramm 22 eine CSTA-Nachricht 136, die auch als DeliveredEvent-Nachricht bezeichnet wird und die folgenden Parameter enthält:
- Connection D4C2,
- alertingDevice D6,
- callingDevice D1,
- calledDevice D2,
- lastRedirectionDevice D2,
- originatingNIDConnection D4C2,
- localConnectionInfo Alerting,
- cause distributed,
- associatedCallingDevice D4,
- callLinkageData G1, T1.

Durch die Nachrichten 134 und 136 zeigt das Gruppenprogramm 32 an, dass es dem ankommenden Ruf nicht mehr bearbeiten muss.

Zu einem Zeitpunkt t14 sendet das Endgerät 44 an das Anwendungsprogramm 22 eine CSTA-Nachricht 138, die auch als DeliveredEvent-Nachricht bezeichnet wird und die folgenden Parameter enthält:
- Connection D6C2,
- alertingDevice D6,
- callingDevice D1,
- calledDevice D2,
- lastRedirectionDevice D2,
- originatingNIDConnection D5C1,
- localConnectionInfo Alerting,
- cause distributed,
- associatedCallingDevice D5,
- callLinkageData G1, T1.
Durch die CSTA-Nachricht 138 bestätigt das Endgerät 44 die erfolgreiche Rufweiterleitung.

Zu einem Zeitpunkt t15 sendet das Endgerät 44 eine CSTA-Nachricht 140 an das Anwendungsprogramm 22, die auch als AgentBusyEvent-Nachricht bezeichnet wird und die folgenden Parameter enthält:
- agentDevice D6,
- agentGroup A,
- AgentID 120.
Mit Hilfe der CSTA-Nachricht 140 wird das Anwendungsprogramm 22 darüber unterrichtet, dass das Endgerät 44 im Rahmen der Rufverteilung momentan nicht weiter nutzbar ist.

Zu einem Zeitpunkt t16 erzeugt die Anschlusseinheit 29 für das Anwendungsprogramm 22 eine CSTA-Nachricht 142, die auch als EstablishedEvent-Nachricht bezeichnet wird und die folgenden Parameter enthält:
- establishedConnection D4C2,
- answeringDevice D6,
- callingDevice D1,
- calledDevice D2,
- lastRedirectionDevice D2,
- originatingNIDConnection D1C1,
- localConnectionInfo Connected,
- cause distributed,
- associatedCallingDevice D1,
- callLinkageData G1, T1.
Durch die CSTA-Nachricht 142 wird dem Anwendungsprogramm 22 angezeigt, dass die Rufverteilung durchgeführt worden ist.

Das Endgerät 44 erzeugt zu einem Zeitpunkt t17 für das Anwendungsprogramm 22 eine CSTA-Nachricht 144, die gemäß CSTA-Standard als EstablishedEvent-Nachricht bezeichnet wird und die folgenden Parameter enthält:
- establishedConnection D6C2,
- answeringDevice D6,
- callingDevice D1,
- calledDevice D2,
- lastRedirectionDevice D2,
- originatingNIDConnection D5C2,
- localConnectionInfo Connected,
- cause distributed,
- associatedCallingDevice D5,
- callLinkageData G1, T1.
Durch die CSTA-Nachricht 144 wird die erfolgreiche Rufverteilung auch von der Seite des Endgerätes 44 her bestätigt.

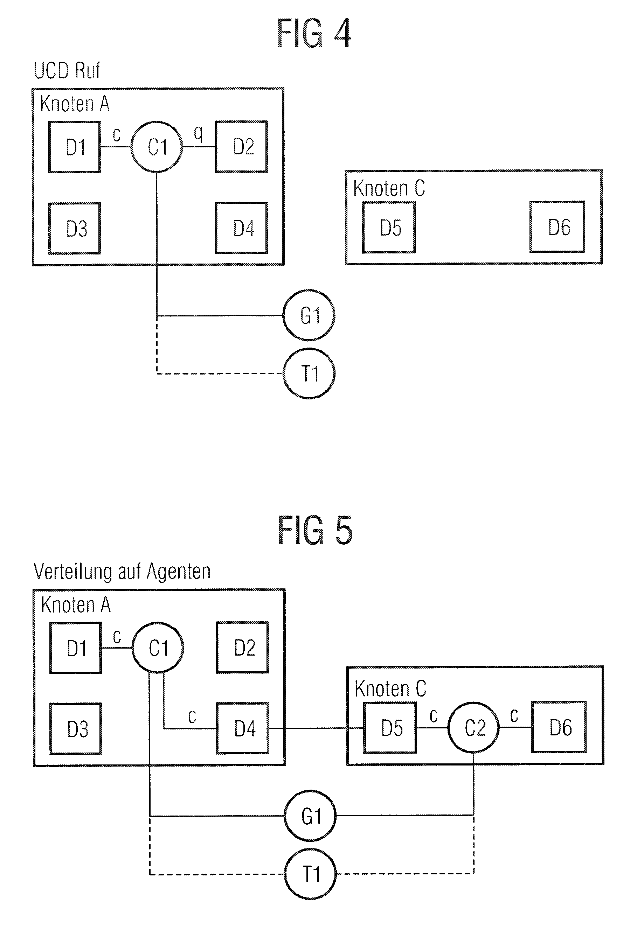

Figur 4 zeigt das CSTA-Modell des Anwendungsprogramms 22 zum Zeitpunkt t6. Die Einheiten mit dem Kennzeichen D1 bis D4 wurden der Telekommunikationsanlage 12 zugeordnet, die im Modell das Kennzeichen "Knoten A" hat. Zwischen der Einheit mit dem Kennzeichen D1 und der Einheit mit dem Kennzeichen D2 wurde ein Ruf mit dem Kennzeichen C1 aufgebaut. Der Verbindungszustand zur Seite des Endgerätes mit dem Kennzeichen D1 hin ist "verbunden", siehe Kleinbuchstabe c (connect). Der Zustand des Rufes zur Seite des Endgerätes mit dem Kennzeichen D2 ist "eingereiht", siehe Kleinbuchstabe q (queued). Außerdem ist mit dem Rufkennzeichen C1 das globale Kennzeichen G1 verknüpft, das für die Rufweiterleitung verwendet wird, um zwei Rufe in verschiedenen Telekommunikationsanlagen 12 und 16 miteinander zu verknüpfen. Ein Thread-Kennzeichen T1 ist ebenfalls dem Kennzeichen C1 zugeordnet, um den zur Rufweiterleitung dienenden Anwendungsprozess auf dem Rechner 18 zu kennzeichnen. Das globale Kennzeichen G1 und das Thread-Kennzeichen T1 werden, wie bereits erwähnt, in anderem Zusammenhang im CSTA-Standard, Ausgabe 2000, näher erläutert.

Die Einheiten mit den Kennzeichen D5 und D6 wurden der Telekommunikationsanlage 16 zugeordnet. Die Telekommunikationsanlage 16 hat im Modell das Kennzeichen "Knoten C".

Figur 5 zeigt das Rufmodell des Anwendungsprogramms 22 zum Zeitpunkt t17. Das Kennzeichen C1 ist nun nicht mehr mit dem Kennzeichen D2 verknüpft. Zum Kennzeichen D1 besteht weiterhin eine Verbindung, siehe Kleinbuchstabe c (connect). Das Kennzeichen C1 ist außerdem mit dem Kennzeichen D4 verbunden, siehe Kleinbuchstabe c (connect). Das globale Kennzeichen G1 ist weiterhin mit dem Rufkennzeichen C1 verknüpft. Ebenso ist das Thread-Kennzeichen T1 weiterhin mit dem Kennzeichen C1 verknüpft.

Bezüglich der Telekommunikationsanlage 16 gibt es, wie bereits erwähnt, in dem Modell des Anwendungsprogramms 22 die Kennzeichen D5 und D6. Beide Kennzeichen sind durch ein Rufkennzeichen C2 für einen Ruf verknüpft, der die Anschlusseinheit 43 mit dem Endgerät 44 verbindet. Zur Seite des Kennzeichens D5 hin besteht eine Verbindung, siehe c (connect). Zwischen dem Rufkennzeichen C2 und dem Kennzeichen D6 besteht ebenfalls eine Verbindung, siehe c (connect).

Das globale Kennzeichen G1 ist auch mit dem Rufkennzeichen C2 verbunden. Ebenso ist das Thread-Kennzeichen T1 mit dem Rufkennzeichen C2 verbunden.

Fällt das Anwendungsprogramm 22, beispielsweise aufgrund einer Störung im Rechner 18 oder im Datenübertragungsnetz 20 aus, so wird das oben erwähnte Host-Control-Flag auf den Wert NULL gesetzt. Durch diese Maßnahme wird in eine Notfall-Betriebsart umgeschaltet, in welcher die Rufverteilung zunächst durch das Gruppenprogramm 32 übernommen wird. Das Gruppenprogramm 32 versucht den ankommenden Ruf 50 an Endgeräte weiterzuleiten, die an die Telekommunikationsanlage 12 angeschlossen sind und die zur Gruppe A gehören. Als Verteilkriterium wird beispielsweise das am längsten nicht belegte Endgerät ausgewählt. Sind alle an die Telekommunikationsanlage angeschlossenen Endgeräte der Gruppe A besetzt, so wird der ankommende Ruf automatisch an das Gruppenprogramm 41 weitergeleitet. Dazu wird die Rufnummer 124 des Gruppenprogramms 41 benutzt. Das Gruppenprogramm 41 versucht nun den ankommenden Ruf an das Endgerät 38 oder an das Endgerät 40 weiterzuleiten. Sind beide Endgeräte besetzt oder aus anderen Gründen nicht verfügbar, so wird der ankommende Ruf an das Gruppenprogramm 48 mit Hilfe der Rufnummer 125 weitergeleitet.

Bei einem anderen Ausführungsbeispiel wird zwischenzeitlich, z.B. zwischen den Zeitpunkten t6 und t7 eine Ansage für den rufenden Teilnehmer eingespielt. Dafür werden CSTA-Nachrichten PlayMessageRequest, PlayMessageResult, ConferencedEvent, PlayEvent, EstablishedEvent, StopEvent und ConnectionCleanedEvent genutzt. Beispielsweise wird in der Ansage mitgeteilt, dass sich der rufende Teilnehmer in einer Warteschleife befindet bis der nächste Platz frei wird.

### Bezugszeichenliste

- 10: Telekommunikationsanlagenverbund
- 12 bis 16: Telekommunikationsanlage
- 18: Rechner
- 20: lokales Datenübertragungsnetz
- 22: Anwendungsprogramm
- 24: TAPI-Schnittstelle
- 26: TSP-Programm
- 28: Amtsleitung
- 30: Vermittlungsstelle
- D1 bis D6: Modellkennzeichen
- 32: ACD-Gruppenprogramm
- 34: Ansageeinheit
- 36: Schnittstelle
- 38, 40: Endgerät
- ID: Kennzeichen
- 41: ACD-Gruppenprogramm
- 42: Schnittstelle
- 43: Schnittstelle
- 44, 46: Endgerät
- 48: ACD-Gruppenprogramm
- 50, 52: Pfeil
- 60 bis 64: Registrierfunktion
- 70 bis 74: lokale Datenbank
- 76: Datenbankzugriff
- 80: CSTA-Nachricht
- 82: zentrale Datenbank
- 100 bis 106: Zeitstrahl
- 110, 112: CSTA-Nachricht
- t1 bis t17: Zeitpunkt
- 114: Setup-Nachricht
- 116 bis 128: CSTA-Nachricht
- 130: Setup-Nachricht
- 132 bis 144: CSTA-Nachricht
- C1: Rufkennzeichen
- G1: globales Kennzeichen
- T1: Thread-Kennzeichen
- C2: Rufkennzeichen
- A: Gruppe

## Patentansprüche

1. Verfahren zum automatischen Verteilen von Anrufen (50)auf Endgeräte (38, 40, 44, 46) von mindestens zwei vermittlungstechnischen Anlagen (12, 14, 16),
a) bei dem in einer ausgewählten vermittlungstechnischen Anlage (12) eine Registrierfunktion (60) zum Registrieren von Endgeräten einer Gruppe (A) ausgeführt wird, die in eine Rufverteilung einzubeziehen sind,
b) bei dem ein an der vermittlungstechnischen Anlage (12) ankommender Ruf (50) durch eine zentrale Rufverteilungsfunktion (22)auf einer Datenverarbeïtungsanlage (18) automatisch an eines der registrierten Endgeräte der Gruppe (A) weitergeleitet wird,
c) bei dem auf mindestens einer weiteren vermittlungstechnischen Anlage (14; 16) eine weitere Registrierfunktion (62; 64) zum Registrieren von Endgeräten (38, 40; 44, 46) derselben Gruppe (A) ausgeführt wird,
d) bei dem die Datenverarbeitungsanlage (18) Nachrichten von der ausgewählten vermittlungstechnischen Anlage (12) empfängt und Nachrichten an die ausgewählte vermittlungstechnische Anlage (12) sendet,
e) bei dem die vermittlungstechnischen Anlagen (12, 14, 16) über ein Datenübertragungsnetz (20) untereinander verbunden sind, das die Datenverarbeitungsanlage (18) mit den vermittlungstechnischen Anlagen (12, 14, 16) verbindet,
f) bei dem die vermittlungstechnischen Anlagen (12, 14, 16) auch über mindestens eine Querleitung miteinander verbundene Telekommunikationsanlagen sind, wobei auf der Querleitung Daten gemäß einem Protokoll zum Verbinden von Telekommunikationsanlagen übertragen werden,
g) bei dem die vermittlungstechnischen Anlagen (12,14, 16) lokale Rufverteilungsfunktionen (32, 41, 48) enthalten,
h) bei dem die Registrierfunktion (60, 62, 64) einer vermittlungstechnischen Anlage (12, 14, 16) auch die lokale Rufverteilungsfunktion (32, 41, 48) derselben vermittlungstechnischen Anlage (12, 14, 16) von der Registrierung eines Endgerätes (38, 40, 44, 46) benachrichtigt,
i) bei dem unabhängig von der vermittlungstechnischen Anlage (12,14,16), an welcher der ankommende Ruf (50) eintrifft, der ankommende Ruf (50) zu der ausgewählten vermittlungstechnischen Anlage (12) zur Rufverteilung weitergeleitet wird,
j) bei dem bei Ausfall der zentralen Rufverteilungsfunktion (22) in eine Notfall-Betriebsbart umgeschaltet wird, indem ein entsprechendes Flag gesetzt wird,
k) bei dem in der ausgewählten vermittlungstechnischen Anlage (12) an Hand, dieses Flags, geprüft wird,
- ob entweder die für die vermittlungstechnischen Anlagen (12, 14, 16) gemeinsame zentrale Rufverteilungsfunktion (22) eingesetzt werden soll
- oder als Notfall-Betriebsart eine lokale Rufverteilungsfunktion (32) der ausgewählten vermittlungstechnischen Anlage (12) eingesetzt werden soll,
l) bei dem in der Notfall-Betriebsart die Weiterleitung eines ankommenden Rufes (50) von der lokalen Rufverteilungsfunktion (32) der ausgewählten vermittlungstechnischen Anlage (12) an die lokale Rufverteilungsfunktion (41) einer anderen vermittlungstechnischen Anlage (14) übergeben wird.

2. Verfahren nach Anspruch 1, **dadurch gekennzeichnet , dass** die Gruppe (A) durch ein Gruppenkennzeichen bezeichnet wird, das beim Registrieren von einer Registrierfunktion (60, 62, 64) gemeinsam mit einem eindeutigen Gerätekennzeichen des zu registrierenden Endgerätes (38, 40, 44, 46) an die Rufverteilungsfunktion (22) übermittelt wird.

3. Verfahren nach Anspruch 1 oder 2, **dadurch gekennzeichnet, dass** die zentrale Rufverteilungsfunktion (22) auf der Datenverarbeitungsanlage (18) ausgeführt wird, die Nachrichten von den vermittlungstechnischen Anlagen (12, 14, 16) empfängt und Nachrichten an mindestens eine vermittlungstechnische Anlage (12, 14, 16) sendet, vorzugsweise Nachrichten gemäß CSTA-Protokoll oder gemäß einem auf diesem Protokoll aufbauenden Protokoll.

4. Verfahren nach Anspruch 3, **dadurch gekennzeichnet , dass** die Datenverarbeitungsanlage (18) mit den vermittlungstechnischen Anlagen (12, 14, 16) über das Datenübertragungsnetz (20) verbunden ist, das gemäß Internetprotokoll arbeitet.

5. Verfahren nach einem der vorhergehenden Ansprüche, **dadurch gekennzeichnet , dass** in lokalen Datenbasissystemen (70, 72, 74) der vermittlungstechnischen Anlagen (12, 14, 16) oder in einer von den vermittlungstechnischen Anlagen (12,14, 16) gemeinsam genutzten Datenbasis (82) die Zuordnung von Kennzeichen für die Rufverteilung zu der Gruppe gespeichert werden,
und dass eine Registrierfunktion (60, 62, 64) auf die lokale Datenbasis ihrer vermittlungstechnischen Anlage (12 ,14, 16) oder auf eine gemeinsam benutzte Datenbasis (82) zugreift, um die Gruppe (A) zu ermitteln.

6. Verfahren nach Anspruch 5, **dadurch gekennzeichnet, dass** die Kennzeichen Rufnummern von Endgeräten (38, 40, 44, 46) oder Benutzungskennzeichen (ID 110, ID 111, ID 120, ID 121) von Bedienpersonen der Endgeräte (38, 40, 44, 46) sind.

7. Verfahren nach einem der vorhergehenden Ansprüche, **dadurch gekennzeichnet , dass** auf der Querleitung Daten gemäß dem Protokoll QSIG übertragen werden.

8. Anlagenverbund (10), mit mindestens zwei vermittlungstechnischen Anlagen (12 bis 16), **dadurch gekennzeichnet , dass** in den vermittlungstechnischen Anlagen (12, 14, 16) jeweils eine Registrierfunktion (60, 62, 64) zum Registrieren von Endgeräten (38, 40, 44, 46) einer Gruppe (A) enthalten ist, die in einer Rufverteilung einzubeziehende Endgeräte enthält, dass die Registrierfunktionen (60, 62, 64) zum Registrieren von Endgeräten (38, 40, 44, 46) derselben Gruppe (A) dienen und dass die vermittlungstechnischen Anlagen (12, 14, 16) des Anlagenverbundes (10) so aufgebaut sind, dass sie zur Durchführung des Verfahrens nach einem der Ansprüche 1 bis 7 geeignet sind.

9. Programm mit einer Befehlsfolge, bei deren Ausführung durch einen Prozessor ein Verfahren nach einem der Ansprüche 1 bis 7 ausgeführt wird.

## Claims

1. Method for automatic distribution of calls (50) to terminals (38, 40, 44, 46) by at least two call distribution facilities (12, 14, 16), wherein
a) in a selected call distribution facility (12), a registry function is executed to register terminals of a group (A) to be included in a call distribution,
b) an incoming call (50) to the call distribution facility (12) is automatically forwarded by a central call distribution function (22) on a data processing system (18) to one of the registered terminals of the group (A),
c) on at least one further call distribution facility (14; 16), a further registry function (62; 64) is executed to register terminals (38, 40; 44, 46) of the same group (A),
d) the data processing system (18) receives messages from the selected call distribution facility (12) and sends messages to the selected call distribution facility (12),
e) the call distribution facilities (12, 14, 16) are connected together via a data transmission network (20) which connects the data processing system (18) with the call distribution facilities (12, 14, 16),
f) the call distribution facilities (12, 14, 16) are also telecommunications systems connected together via at least one cross line, wherein data are transmitted on the cross line according to a protocol for connecting telecommunications systems,
g) the call distribution facilities (12, 14, 16) contain local call distribution functions (32, 41, 48),
h) the registry function (60, 62, 64) of a call distribution facility (12, 14, 16) also reports the registration of a terminal (38, 40, 44, 46) to the local call distribution function (32, 41, 48) of the same call distribution facility (12, 14, 16),
i) independently of the call distribution facility (12, 14, 16) at which the incoming call (50) is received, the incoming call (50) is forwarded to the selected call distribution facility (12) for call distribution,
j) on failure of the central call distribution function (22), the system switches to an emergency operating mode in that a corresponding flag is set,
k) in the selected call distribution facility (12), using this flag it is checked:
- whether the central call distribution function (22) common to the call distribution facilities (12, 14,16) is to be used,
- or whether a local call distribution function (32) of the selected call distribution facility (12) is to be used as emergency operating mode,
l) in the emergency operating mode, the forwarding of an incoming call (50) by the local call distribution function (50) of the selected call distribution facility (12) is transferred to the local call distribution function (41) of another call distribution facility (14).

2. Method according to claim 1, **characterized in that** the group (A) is designated by a group identifier which, on registration by a registry function (60, 62, 64), is transmitted to the call distribution function (22) together with a unique terminal identifier of the terminal to be registered (38, 40, 44, 46).

3. Method according to claim 1 or 2, **characterized in that** the central call distribution function (22) is executed on the data processing system (18) which receives messages from the call distribution facilities (12, 14, 16) and sends messages to at least one call distribution facility (12, 14, 16), preferably messages according to CSTA protocol or according to a protocol based on this protocol.

4. Method according to claim 3, **characterized in that** the data processing system (18) is connected to the call distribution facilities (12, 14, 16) via the data transmission network (20) which works according to internet protocol.

5. Method according to any one of the preceding claims, **characterized in that** the allocation of identifiers to a group for call distribution is stored in local database systems (70, 72, 74) of the call distribution facilities (12, 14, 16) or in a database (82) used in common by the call distribution facilities (12, 14, 16), and that a registry function (60, 62, 64) accesses the local database of its call distribution facility (12, 14, 16) or a commonly used database (82) to determine the group (A).

6. Method according to claim 5, **characterized in that** the identifiers are call numbers of terminals (38, 40, 44, 46) or user identifiers (ID 110, ID 111, ID 120, ID 121) of operators of the terminals (38, 40, 44, 46).

7. Method according to any one of the preceding claims, **characterized in that** data are transmitted on the cross line according to QSIG protocol.

8. System group (10) with at least two call distribution facilities (12 to 16), **characterized in that** each call distribution facility (12, 14, 16) contains a registry function (60, 62, 64) for registration of terminals (38, 40, 44, 46) of a group (A) which contains terminals to be included in a call distribution, that the registry functions (60, 62, 64) serve to register terminals (38, 40, 44, 46) of the same group (A), and that the call distribution facilities (12, 14,16) of the system group (10) are constructed such that they are suitable for performance of the method according to any one of claims 1 to 7.

9. Program with a command sequence, in execution of which by a processor a method according to any one of claims 1 to 7 is carried out.

## Revendications

1. Procédé de distribution automatique d'appels (50) sur des appareils terminaux (38, 40, 44, 46) d'au moins deux installations techniques de commutation (12, 14, 16),
a) selon lequel, dans une installation technique de commutation (12) sélectionnée est exécutée une fonction d'inscription (60) pour l'inscription, dans un groupe (A), d'appareils terminaux qui doivent être intégrés dans une distribution d'appels,
b) selon lequel, un appel (50) arrivant à l'installation technique de commutation (12) est transmis automatiquement par une fonction centrale de distribution d'appels (22) dans une installation de traitement de données (18) à un des appareils terminaux inscrits du groupe (A),
c) selon lequel, dans au moins une autre installation technique de commutation (14; 16) est exécutée une autre fonction d'inscription (62; 64) pour l'inscription d'appareils terminaux (38, 40; 44, 46) du même groupe (A),
d) selon lequel, l'installation de traitement de données (18) reçoit des messages de l'installation technique de commutation (12) sélectionnée et envoie des messages à l'installation technique de commutation (12) sélectionnée,
e) selon lequel, les installations techniques de commutation (12, 14, 16) sont reliées entre elles par un réseau de transmission de données (20) qui relie l'installation de traitement de données (18) aux installations techniques de commutation (12, 14, 16),
f) selon lequel, les installations techniques de commutation (12, 14, 16) sont également des installations de télécommunication reliées entre elles par au moins une ligne transversale, des données étant transmises sur la ligne transversale selon un protocole pour la liaison d'installations de télécommunication,
g) selon lequel, les installations techniques de commutation (12, 14, 16) contiennent des fonctions locales de distribution d'appels (32, 41, 48),
h) selon lequel, la fonction d'inscription (60, 62, 64) d'une installation technique de commutation (12, 14, 16) prévient également la fonction locale de distribution d'appels (32, 41, 48) de la même installation technique de commutation (12, 14, 16) de l'enregistrement d'un appareil terminal (38, 40, 44, 46),
i) selon lequel, indépendamment de l'installation technique de commutation (12, 14, 16) sur laquelle apparaît l'appel arrivant (50), l'appel arrivant (50) est transmis pour la distribution d'appels à l'installation technique de commutation (12) sélectionnée,
j) selon lequel, lors d'une panne de la fonction centrale de distribution d'appels (22) a lieu un passage à un mode opératoire d'urgence en activant un drapeau correspondant,
k) selon lequel, dans l'installation technique de commutation (12) sélectionnée, à l'aide de ce drapeau il est vérifié si
- soit la fonction centrale de distribution d'appels (22) commune aux installations techniques de commutation (12, 14, 16) doit être mise en oeuvre
- soit une fonction locale de distribution d'appels (32) de l'installation technique de commutation (12) sélectionnée doit être mise en oeuvre en tant que mode opératoire d'urgence,
l) selon lequel, dans le mode opératoire d'urgence, la transmission d'un appel (50) arrivant est transférée par la fonction locale de distribution d'appels (32) de l'installation technique de commutation (12) sélectionnée à la fonction locale de distribution d'appels (41) d'une autre installation technique de commutation (14).

2. Procédé selon la revendication 1, **caractérisé en ce que** le groupe (A) est désigné par un identifiant de groupe qui, lors de l'inscription par une fonction d'inscription (60, 62, 64) est transmis à la fonction de distribution d'appels (22) conjointement avec un identifiant d'appareil univoque de l'appareil terminal (38, 40, 44, 46) à inscrire.

3. Procédé selon la revendication 1 ou 2, **caractérisé en ce que** la fonction centrale de distribution d'appels (22) est exécutée dans une installation de traitement de données (18) qui reçoit des messages d'installations techniques de commutation (12, 14, 16) et qui envoie des messages à au moins une installation technique de commutation (12, 14, 16), de préférence des messages selon le protocole CSTA ou selon un protocole établi sur ce protocole.

4. Procédé selon la revendication 3, **caractérisé en ce que** l'installation de traitement de données (18) est reliée aux installations techniques de commutation (12, 14, 16) par le biais du réseau de transmission de données (20) qui fonctionne selon le protocole Internet.

5. Procédé selon l'une quelconque des revendications précédentes, **caractérisé en ce que**, dans des systèmes locaux de base de données (70, 72, 74) des installations techniques de commutation (12, 14, 16) ou dans une base de données (82) utilisée en commun par les installations techniques de commutation (12,14, 16) est mémorisée l'association d'identifiants pour la distribution d'appels au groupe,
et **en ce qu'**une fonction d'inscription (60, 62, 64) accède à la base de données locale de son installation technique de commutation (12 ,14, 16) ou à une base de données (82) utilisée en commun pour déterminer le groupe (A).

6. Procédé selon la revendication 5, **caractérisé en ce que** les identifiants sont des numéros d'appel d'appareils terminaux (38, 40, 44, 46) ou des identifiants d'utilisation (ID 110, ID 111, ID 120, ID 121) d'opérateurs des appareils terminaux (38, 40, 44, 46).

7. Procédé selon l'une quelconque des revendications précédentes, **caractérisé en ce que** des données sont transmises sur la ligne transversale selon le protocole QSIG.

8. Groupement d'installations (10), ayant au moins deux installations techniques de commutation (12 bis 16), **caractérisé en ce que** dans les installations techniques de commutation (12, 14, 16) est contenue respectivement une fonction d'inscription (60, 62, 64) pour l'inscription d'appareils terminaux (38, 40, 44, 46) d'un groupe (A) qui contient des appareils terminaux à intégrer dans une distribution d'appels, **en ce que** les fonctions d'inscription (60, 62, 64) servent à l'inscription d'appareils terminaux (38, 40, 44, 46) du même groupe (A) et **en ce que** les installations techniques de commutation (12, 14, 16) du regroupement d'installations (10) sont agencées de sorte qu'elles soient appropriées pour l'exécution du procédé selon l'une quelconque des revendications 1 à 7.

9. Programme ayant une suite d'instructions lors de l'exécution desquelles par un processeur est exécuté un procédé selon l'une quelconque des revendications 1 à 7.
